# EUROPEAN PATENT SPECIFICATION

(11) **EP 2 420 752 B1**
(45) Date of publication and mention of the grant of the patent: **16.05.2018**
(21) Application number: 10764575.6
(22) Date of filing: 19.01.2010
(51) Int. Cl.: F24F 11/02, F24F 11/00, F24F 1/00, A01M 1/02, A01M 1/24, A01M 29/16, F24F 3/12

(54) **AIR CONDITIONER**
KLIMAANLAGE
CLIMATISEUR

(30) Priority: 14.04.2009 KR 20090032419
(43) Date of publication of application: 22.02.2012
(73) Proprietor: LG Electronics Inc., Seoul 150-721 (KR)
(72) Inventor: SHIM, Ho Jin, Changwon-si Kyungsangnam-do 641-110 (KR); LEE, Sung Hwa, Changwon-si Kyungsangnam-do 641-110 (KR); PARK, Tae Byoung, Changwon-si Kyungsangnam-do 641-110 (KR); PARK, Sung Kwan, Changwon-si Kyungsangnam-do 641-110 (KR)
(74) Representative: Cabinet Plasseraud
(86) International application number: PCT/KR2010/000334
(87) International publication number: WO 2010/120036

(56) References cited:
- CA-A1- 2 467 022
- JP-A- 2001 197 577
- JP-A- 2003 014 267
- KR-A- 930 022 932
- KR-A- 20080 055 450
- KR-B1- 940 009 604
- KR-Y1- 200 221 499
- KR-Y1- 200 303 179
- US-A1- 2004 216 353

## Description

### 1. Field of the invention

The present invention is directed to an air conditioner, and more particularly to an air conditioner that can effectively repel harmful insects.

### 2. Description of the Related Art

In general, an air conditioner uses a refrigeration cycle of coolant, which is made by a compressor, a condenser, an expanding balloon, an evaporator and the like, to cool/heat the inside of a room or to purify the indoor air in order to provide a more comfortable indoor environment for the user. Such an air conditioner is divided into two major types, a separated type and an integrated type.

The separated type and the integrated type are functionally the same. However, the separated type includes an indoor unit which has cooling/radiation device and an outdoor unit which has a radiation/cooling device and a compressor to connect each separated indoor unit and outdoor unit to a coolant piping. Such air conditioner is already disclosed in JP2003014267. Meanwhile, the integrated type may be directly installed on the wall or the window frame of houses by integrating cooling and radiation functions.

In addition, the air conditioner is mainly operated in a high temperature and humidity environment such as the summer months. In the high temperature and humidity environment, climatic conditions where various harmful insects (flies, mosquitoes, mites, etc.) can be lived will be optimally maintained.

On depending on the increasing various functions and the complexity of the air conditioner, various efforts have been attempted to repel harmful insects along with the air condition in the air conditioner.

Therefore, there is a need of providing an air conditioner that can effectively repel harmful insects through an acoustic sound signal output from a plurality of output units.

In addition, there is a need of providing an air conditioner that can effectively repel harmful insects through a plurality of output units.

In addition, there is a need of providing an air conditioner that can easily change frequencies of an acoustic sound signal.

In addition, there is a need of providing an air conditioner that can easily and effectively dispose output units for outputting an acoustic sound signal.

### SUMMARY OF THE INVENTION

In order to solve the problems and other problems, according to the present invention, there is provided an air conditioner comprising the features appending claim 1. The subclaims thereof forming further alternative embodiments.

### BRIEF DESCRIPTION OF THE DRAWINGS

FIG. 1 is a perspective view illustrating a case when an air conditioner according to an embodiment of the present invention is stopped.
FIG. 2 is a perspective view illustrating a case when an air conditioner according to an embodiment of the present invention is operated.
FIG. 3 is an exploded perspective view illustrating an air conditioner according to an embodiment of the present invention.
FIG. 4 is a diagram illustrating an example that an output unit of a harmful insect repeller according to an embodiment of the present invention is installed.
FIG. 5 is an internal block diagram illustrating an air conditioner according to an embodiment of the present invention.
FIG. 6 and 7 are diagrams illustrating various examples of acoustic sound signals output from an output unit of a harmful insect repeller.

### DETAILED DESCRIPTION OF THE PREFERRED EMBODIMENTS

Hereinafter, embodiments of the present invention will be described with reference to accompanying drawings.

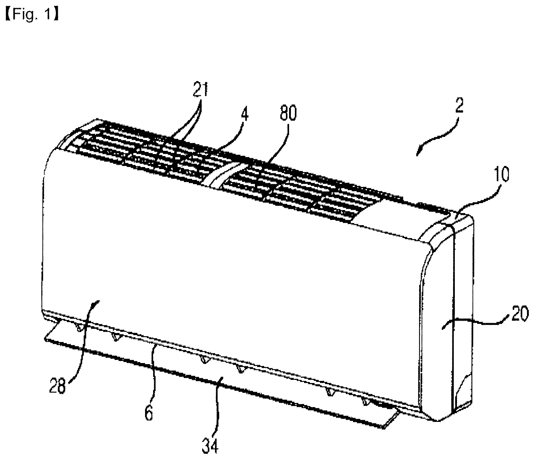

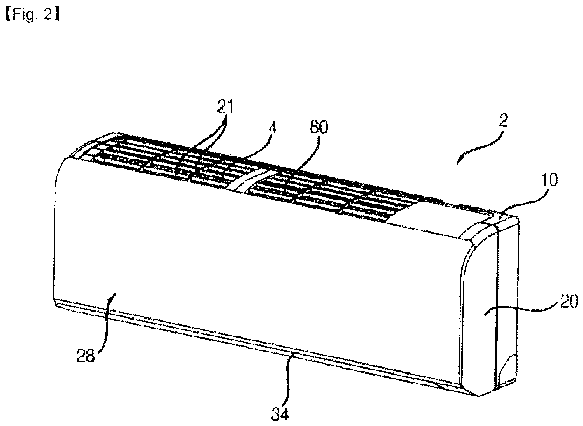

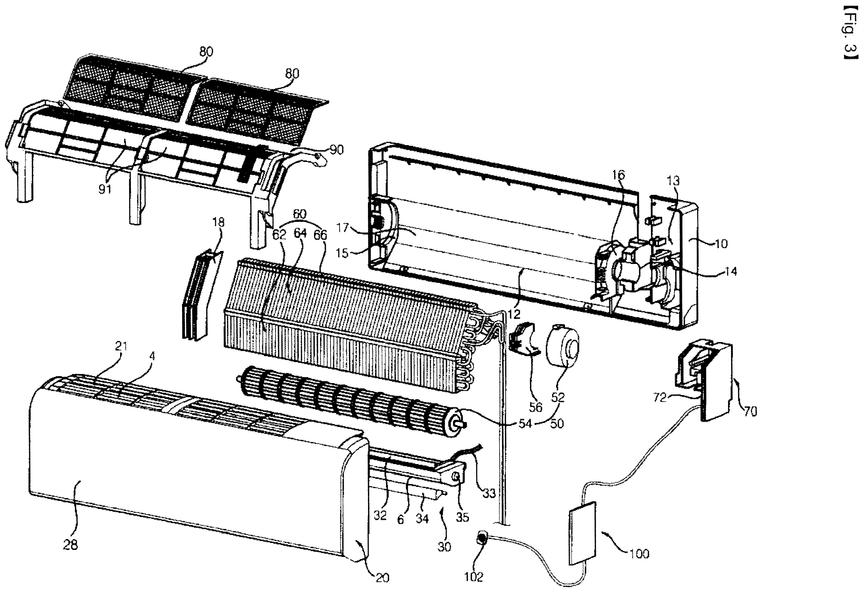

FIG. 1 is a perspective view illustrating a case when an air conditioner according to an embodiment of the present invention is stopped, FIG. 2 is a perspective view illustrating a case when an air conditioner according to an embodiment of the present invention is operated, and FIG. 3 is an exploded perspective view illustrating an air conditioner according to an embodiment of the present invention.

The air conditioner according to the embodiment of the present invention includes an indoor unit body 2 and a harmful insect repeller 100.

The indoor unit body 2 includes an air inlet 4 for sucking indoor air and an air outlet 6 for discharging conditioned air. As a conditioning unit which sucks air from the air inlet 4, conditions the sucked air in the inside and discharges the conditioned air through the air outlet 6, the indoor unit body 2 may be used in a stand type air conditioner, a ceiling-mounted air conditioner and a wall-mounted air conditioner. Hereafter, the wall-mounted air conditioner will be described as an example.

The indoor unit body 2 includes a chassis 10, a front frame 20, an inlet grill 21, a front panel 28 and an outlet unit 30.

In the indoor unit body 2, the air inlet 4 may be disposed to the front and the upper side of the indoor unit body 2 while the air outlet 6 may be disposed to the lower side of the indoor unit body 2, and the front panel 28 may be moved forward the front of the indoor unit body 2 or rotated around the top or the bottom of the indoor unit body 2, such that an air inlet path may be provided between the front and the top or the bottom of the indoor unit body 2. Further, the air inlet 4 may be disposed to the upper surface while the air outlet 6 may disposed to the bottom of the indoor unit body 2, such that the front panel 28 may cover the front of the indoor unit body 2. In the following, it is described that the air inlet 4 is disposed to the top of the indoor unit body 2, especially the upper side of the indoor unit body 2, the air outlet 6 is disposed to the bottom of the indoor unit body 2, especially the lower side of the indoor unit body 2, and the front panel 28 forms the front appearance of the air conditioner while the front panel 28 frontward protrudes around the upper of the indoor unit body 2 and be rotationally connected to the indoor unit body 2 for various services of the indoor unit body 20.

The chassis 10 may be installed on the wall of indoor while forming a blowing path passing air and is a kind of case which various components can be installed.

The front frame 20 is intended to form a space between the chassis 10 and the front frame 20 and disposed to the front of the chassis 10.

In the front frame 20, openings 4, 5 are formed in the upper surface and the front surface of the front frame 20, and the upper surface opening functions as the air inlet 4, and the front surface opening 5 functions as a service hole for the mounting or demounting of a filter or services described in later.

The inlet grill 21 is intended to protect the lower portion of the indoor unit body 20 while the indoor air is sucked inside the indoor unit body 2 and a grill shape is formed into the air inlet 4 which is the upper surface opening of the front frame 20.

The outlet unit 30 is intended to guide the conditioned air inside the indoor unit body 2 and assembled with at least one of the chassis 10 and the front frame 20 by a connection means such as a connection unit or a hanging means such as a hook.

In the chassis 10, a blowing path guide 12 which guides the inlet air from the air inlet 4 to the air outlet 6 is formed, and an electronic unit 13, which is provided with various electronic components, is formed into at least one side of the left and the right of the blowing path guide 10.

The blowing path guide 12 formed in the chassis 10 is intended to form a path of a fan 54 described in later and includes the left and the right guides 15, 16 which protrude frontward the chassis 10 and the center guide 17 which is between the left guide 15 and the right guide 16, and a heat exchanger supporter 18, which supports the heat exchanger 60 while forming a path of air, is installed into at least one of the left and the right guides 15, 16.

A motor installation unit 14 on which a fan motor 52 is securely mounted and supported is protrusively formed into the front of the electronic unit 13 formed in the chassis 10

A control box 70 is disposed to the electronic unit 15, and an indoor unit control unit 72 which controls a fan motor 52 of a blower 50 and a wind regulation driving unit 35 of a wind regulation device and the like described in later and a harmful insect repeller control unit 180 which controls the harmful insect repeller 100 described in later may be mounted on the control box 70

The front frame 20 forms the blowing path together with the chassis 10, and protects the electronic unit 13 formed on the chassis 10.

In the front frame 20, the front opening 5 is front and rear formed on the front of the path guide 12 of the chassis 10 and the upper surface opening 4 is up and down formed on the front upper surface of the path guide 12 of the chassis 10.

In the outlet unit 30, a drain unit 32 which receives condensed water dropped from the heat exchanger 60 described in later is formed on the upper surface of the outlet unit 30, a drain connection hose 33 which guides the condensed water to the outside of the indoor unit body 2 is connected to the drain unit 32 and the opening of the air outlet 6 is formed in the lower portion of the drain unit 32.

A wind direction regulation device which regulates the wind direction of air passing through the air outlet 6 is installed in the outlet 30.

The wind direction regulation device includes a wind direction regulation unit 34 which arranged to regulate the wind direction while guiding air passing the air outlet 6, in particular, which arranged to be rotated in the outlet unit 30 and a wind direction regulation driving unit 35 which rotates the wind direction regulation unit 34

The wind direction regulation unit 34 includes a left and right wind direction regulation unit which left and right regulates air passing the air outlet 6 and a up and down wind direction regulation unit which up and down regulates air passing the air outlet 6.

The wind direction regulation driving unit 35 is connected to the left and right wind direction regulation unit such that the left and right wind direction regulation unit may be rotated around the vertical axis and connected to the up and down wind direction regulation unit such that the up and down wind direction regulation unit may be rotated around the horizontal axis.

The wind direction regulation driving unit 35 includes the wind direction regulation motor installed on one side of the left and right of the outlet unit 30.

Meanwhile, according to the embodiment, the air conditioner includes a blower 50, which sucks air from the air inlet 4 and discharges the air to the air outlet 6 through the inside of the indoor unit body 2, and the heat exchanger 60 to heat air sucked into the inside of the indoor unit body 2 with coolant.

The blower 50 includes the fan motor 52 securely mounted and installed on the motor installation unit 14 formed on the chassis 10, especially the electronic unit 13, the fan 54 installed on the rotation axis of the fan motor 52 and located on the path guide 12, and a motor cover 56 installed on the chassis 10 to cover the fan motor 52.

The fan 54 includes a cross-flow fan left and right formed between the path guides 15, 16, 17, especially the left and right path guides 15, 16.

The heat exchanger 60 is arranged on a space of the indoor unit body 2 to be located between the air inlet 4 and the fan 54, especially to be located on the rear of the front portion of the front frame 20, and the bottom is installed to be located on the upper side of the drain unit 32.

The heat exchanger 60 includes a vertical portion 62 vertically located on the upper side of the drain unit 32, a front slope portion 64 obliquely formed from the upper toward the rear upper side of the vertical portion 62 and a rear slop portion 66 obliquely formed from the upper toward the rear lower side of the front slop portion 64.

According to the embodiment, the air conditioner includes a filter 80 arranged on the inside of the indoor unit body 2 to purify air sucked from the air inlet 4 and a filter frame 90 which can mount the filter 80.

The filter frame 90 is arranged so as to be located between the air inlet 4 and the heat exchanger 60 and an opening 91 in which air is passed and the filter 80 is arranged is formed.

The harmful insect repeller 100 is intended to repel or tempt harmful insects such as mosquitoes in a room to be conditioned by the air conditioner and is attached to the indoor unit body 2.

The harmful insect repeller 100 includes a plurality of output units 102 which output acoustic sound signals of specific frequency bands that the harmful insects such as mosquitoes evade. The harmful insect repeller 100 further includes a harmful insect repeller control unit 180 for outputting a pulse signal and an amplifying unit 185, as described in later.

The plurality of output units 102 of the harmful insect repeller 100 may be a speaker which converts an electrical signal into the acoustic sound signal and outputs the acoustic sound signal. The speaker 102 may be installed to be fixed to the indoor unit body 2 and also may be installed to be moved to the indoor unit body 2. Hereinafter, a case where the output unit is installed to be fixed to the indoor unit body 2 will be mainly described.

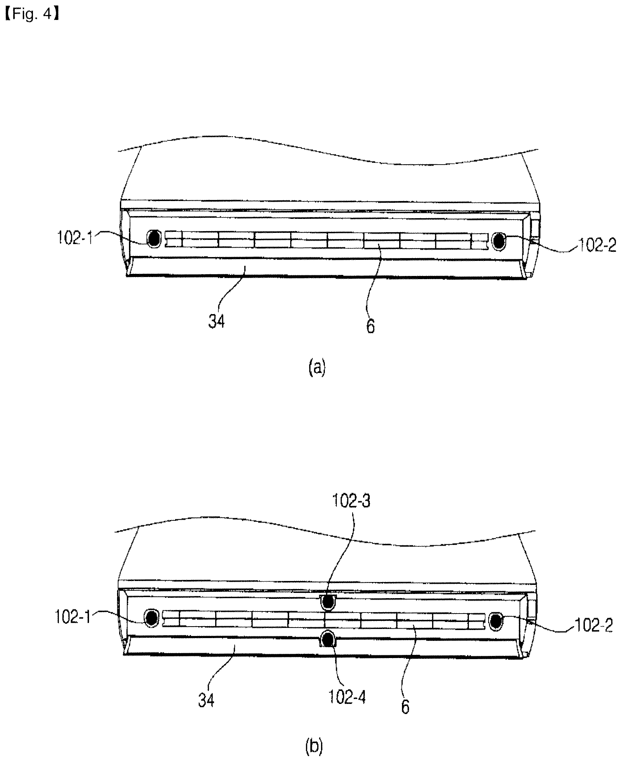

FIGS. 4A and 4B are diagrams illustrating an example that an output unit of a harmful insect repeller is installed according to an embodiment of the present invention.

Referring to the drawings, FIG. 4A is showing that the plurality of output units 102 are arranged on both sides of the air outlet in a row. That is, the pluralities of output units 102-1, 102-2 are arranged on the left and right sides of the air outlet. By this arrangement, the acoustic sound signals outputted from the plurality of output units 102 are effectively emitted.

In addition, since the output unit 102 of the harmful insect repeller 100 is arranged to be covered by the wind direction regulation unit 34, only when the wind direction regulation unit 34 is opened and the air outlet 6 is opened, the output unit is exposed and accordingly, it will be able to efficiently and easily implement.

Next, FIG. 4B is showing that the plurality of output units 102 are arranged around the air outlet in a lattice. That is, the plurality of output units 102-1, 102-2,102-3, 102-4 are arranged on the left side, the right side, the upper side and the lower side of the air outlet. By this arrangement, the acoustic sound signals outputted from the plurality of output units 102 are emitted to the inside of a room in all directions.

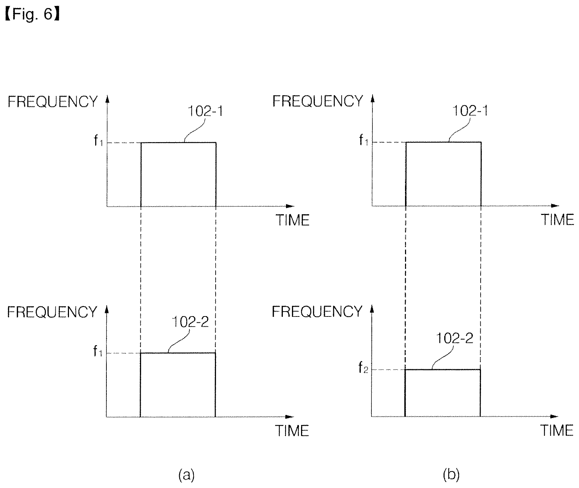

Meanwhile, the polarity of output units 102 may crisscross arranged on both sides of the air outlet, unlike FIG. 6A, and a variety of arrangements are possible.
All of these arrangements are to efficiently emit the acoustic sound signals to the inside of the room.

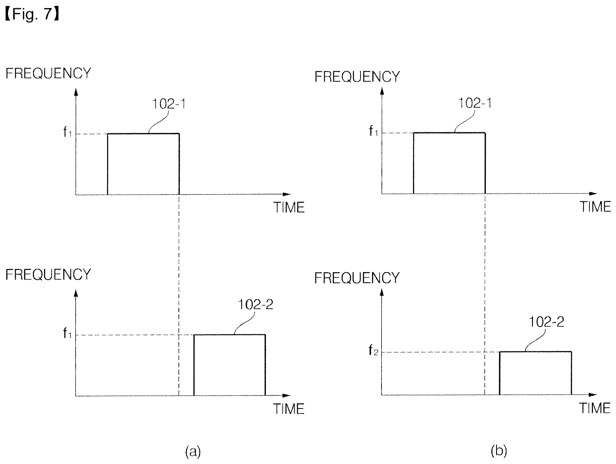

Meanwhile, as described above, when the harmful insect repeller 100 includes a plurality of output units, the acoustic sound signals are outputted from each of the output units at the same time (see FIG. 6 below) or may be selectively
sequentially outputted from each of the output units (see FIG. 7 below).

In addition, in FIGS. 4A and 48, the air discharged from the air outlet 6 may be heat exchanged air according to whether the indoor unit is operated.

Meanwhile, unlike drawings, the plurality of output unit 102 may be attached to exterior of the indoor unit body 2 and accordingly, the plurality of output units 102 may arranged on the exterior of the indoor unit body 2 in a row or in a lattice.

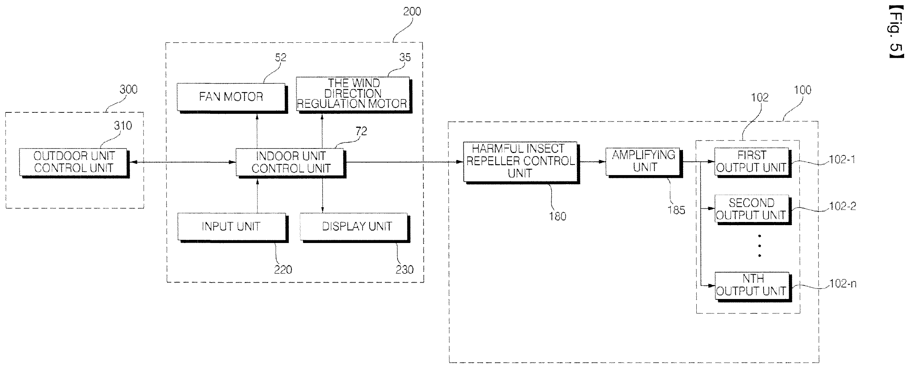

FIG. 5 is an internai black diagram illustrating an air conditioner according to an embodiment of the present invention.

Referring to the drawing, the air conditioner includes the indoor unit 200 and the harmful insect repeller 100 according to the embodiment of the present invention.

The indoor unit 200 includes the indoor unit body 2 having the front panel 28, the air inlet 4 disposed at the one side of the front panel 28, the air outlet 6 disposed at the one side of the front panel 28, and the wind direction regulation unit 34 which regulates the wind direction of the discharged air and opens/closes the air outlet 6, as described above.

In addition, the indoor unit 200 further includes the blower 50 driven by the fan motor 52, the wind direction regulation unit 34 driven by the wind direction regulation motor 35, the heat exchanger 60 to heat sucked air with coolant, the indoor unit control unit 72 to control overall operations of the indoor unit, the input unit 220 to receive the various operation commands from the user, and the display unit 230 to display states where the acoustic sound signals are outputted.

The indoor unit control unit controls overall operations of the indoor unit. For example, when the operating signal of the air conditioner is received from the input unit 220 such as a remote controller, the indoor unit control unit 72 control such that the operating operation of the air conditioner is started. In this case, the compressor (not shown) of the outdoor unit 300 is driven through communication with the outdoor unit control unit 310 in the outdoor unit 300.

The indoor unit control unit 72 controls the fan motor 52 to operate the blower 50 of the indoor unit and controls the wind direction regulation motor 35 to open the wind direction regulation unit 34, according to the driving of the compressor (not shown) of the outdoor unit. Accordingly, sucked air in the inside of the room is heat-exchanged in the heat exchanger 60 and the heat exchanged air is again discharged to the inside of the room.

Meanwhile, the indoor unit control unit 72 outputs the operating signal to the harmful insect repeller control unit 180 within the harmful insect repeller 100. The operating signal may be generated and outputted when an indoor unit operating command is inputted or a harmful insect repellence command is inputted from the input unit 220. That is, the harmful insect repeller 100 is operated when the indoor unit is in an operating mode or in a harmful insect repellence mode where the indoor unit is not operated and only a separate acoustic signal is outputted.

The harmful insect repeller 100 is intended to repel or tempt harmful insects such as mosquitoes in a room to be conditioned by the air conditioner and is attached to the indoor unit body 2.

The harmful insect repeller 100 includes a plurality of output unit which output the acoustic sound signal of a specific frequency that harmful insects evade. Thereby, the harmful insects can be effectively repelled.

Meanwhile, the harmful insects are flies, mosquitoes, mites, moths and the like. In addition, many flies and mosquitoes are variously distributed.

The harmful insect repeller 100 can output the acoustic sound signals of specific frequency bands according to the types of harmful insects. Herein, the range of specific frequency bands preferably has the frequencies of 20 kHz to 100 kHz, as frequency bands that various harmful insects evade. Within the frequency band, since the specific frequencies that flies, mosquitoes, mites, moths and the like evade are different each other, the output unit outputs the acoustic sound signals by varying the specific frequencies depending on the types of harmful insects according to the embodiment of the present invention.

Meanwhile, the specific frequency bands may use frequencies of wing sound of detected male harmful insects. The range of frequencies of the wing sound of male harmful insects may be approximately 200 Hz to 600 Hz. For example, since frequencies of the wing sound of male harmful insects of a culex or the like are approximately 250 Hz to 400 Hz, frequencies of the wing sound of male harmful insects of a malaria mosquito are approximately 300 Hz to 600 Hz, and frequencies of the wing sound of male harmful insects of a stegomyia are approximately 600 Hz, these frequencies may be used.

The harmful insect repeller 100 includes a plurality of output unit 102, a harmful insect repeller control unit 180 and an amplifying unit 185.

The plurality of output unit 102 convert level-amplified pulse signals in the each amplifying unit 185 into the acoustic sound signals and outputs the acoustic sound signals.

The harmful insect repeller control unit 180 receives the operating signal from the input unit 220 or the indoor unit control unit 72 to operate. That is, in the state where approximately 5V power is received from a power supply (not shown), when the operating signal is received, the operation of the harmful insect repeller control unit 180 is started. Accordingly, the harmful insect repeller control unit 180 outputs the pulse signal to generate the specific frequency.

Herein, the operating signal received from the harmful insect repeller control unit 180 may be the indoor unit operating operation signal or the harmful insect repelling operation signal, which are directly received from the remote controller or input unit 220. In addition, the operating signal received in the harmful insect repeller control unit 180 may be the indoor unit operating operation signal or the harmful insect repelling operation signal, which are received through the indoor unit control unit 310.

The harmful insect repeller control unit 180 performs a pulse width modulation (PWM) of the pulse signal to vary the specific frequencies. Thereby, the specific frequencies can be easily varied.

For example, to repel the various types of harmful insects, the harmful insect repeller control unit 180 performs the pulse width modulation to generate a plurality of specific frequencies. That is, the pulse signals having different specific frequencies are generated according to variable pulse width by the pulse width
modulation. I n particular, the bigger a pulse width, the higher a specific frequency of generated pulse signal.

Although not shown in the drawing, the plurality of specific frequencies may be determined by a harmful insect type detector (not shown) detecting the type of the harmful insect.

The amplifying unit 185 amplifies the level of the pulse signal output from the harmful insect repeller control unit 180. The amplifying unit 185 may be implemented in various types such as an OP AMP, transistor and the like.

The plurality of output unit 102 convert level-amplified pulse signals into the acoustic sound signals and outputs the acoustic sound signals. In the drawing, the output units are shown as the first to n output units (102-1, ..., 102-n). The various operations of the plurality of output unit 102 will be described with the reference to FIG. 6 and FIG. 7.

Meanwhile, the output unit 102 may be implemented by metal components as a speaker and outputs the acoustic sound signals based on vibrations according to inputted pulse signals.

The harmful insect repeller control unit 180 and the amplifying unit 185 are arranged to be mounted on the same substrate, and the amplifying unit 185 and the output unit 102 may be electrically connected by wires. The wires may include a pulse signal transmission wire which transmits amplified pulse signal in the amplifying unit 185 to the output unit 120 and a power wire which supplies power to the output unit 120 The control unit 180 and the amplifying unit 185 mounted on the same substrate may be evenly arranged in the control box 70 together with a substrate on which the indoor unit control unit 72 is mounted, as described above.

Meanwhile, the indoor unit control unit 72 can control the display unit 230 to display the state where the acoustic sound signals are outputted within the harmful insect repeller 100. Since the acoustic sound signals output from the harmful insect repeller 100 may be frequency bands of 20 kHz to 100 kHz, not audible bands, the display unit 230 preferably displays whether the acoustic sound signals are outputted so that the user can intuitively recognize the operation of the harmful insect repeller.

The display unit 230 may be implemented by including light emitting diodes or the like emitting light. When the acoustic sound signals from the harmful insect repeller 100 are outputted, the display unit 230 may display the output state in various examples. For example, the display unit 230 may display such that the number of light emitting and an amount of light emitting per unit time are increased in proportion to the frequency band of the acoustic sound signal. Accordingly, the user can intuitively predict the frequency size of the approximate acoustic sound signal as well as whether the acoustic sound signal is generated.

Meanwhile, when the level of the pulse signal output from the amplifying unit 185 is detected and the detected pulse signal exceeds a predetermined value, the user can determine a peculiar operation and it is possible to stop the operation of the harmful insect repeller control unit 180.

In addition, although one harmful insect repeller control unit 180 and one amplifying unit 185 are shown in the drawing according to the plurality of output unit 102, it is possible to include such that the harmful insect repeller control unit and the amplifying unit are matched for each output unit. Further, it is possible to include such that each of the harmful insect repeller control unit and the amplifying unit is matched only when the specific frequencies are different. When the specific frequencies are the same, the same harmful insect repeller control unit and the amplifying unit may be used.

FIGS. 6 and 7 are diagrams illustrating various examples of acoustic signals output from the output unit of the harmful insect repeller.

Referring to the drawing, first, FIG. 6A is a diagram illustrating that acoustic sound signals are outputted and acoustic sound signals of the same specific frequency f1 are outputted from a plurality of output units at the same time. Accordingly, when the acoustic sound signals are outputted to the inside of a room using the plurality of output units arranged in different locations, since the levels of the acoustic sound signals can be boosted, the effect of the harmful insect repellence can be increased.

Meanwhile, the arrangements of the plurality of output units may be arranged in a row or in a lattice, as shown in FIGS. 4A and 4B, but the arrangements may be arranged in various types.

Next, FIG. 6B is showing that the first output unit 102-1 and the second output unit 102-2 of the plurality of output units 102 output the acoustic sound signals having different specific frequencies at the same time. Thus, by outputting the acoustic sound signals of the different specific frequencies f1, f2 at the same time zone, there are effects of capable of repelling various types of harmful insects at the same time.

Next, although not shown in the drawing, all the units 102-1, ..., 102-n of the plurality of output units 102 may output the acoustic sound signals having different specific frequencies at the same time. Thus, by outputting the acoustic sound signals of the different specific frequencies at the same time zone, there are effects of capable of repelling various types of harmful insects at the same time.

Next, FIG. 7A is a diagram illustrating that acoustic sound signals are sequentially outputted and acoustic sound signals of the same specific frequency f1 are outputted from a plurality of output units 102-1, 102-2 at the same time. Accordingly, by using the plurality of output units arranged in different locations, the acoustic sound signals are sequentially outputted and thus the harmful insect repellence can be performed.

Next, FIG. 7B is showing that the first output unit 102-1 and the second output unit 102-2 of the plurality of output units 102 sequentially output the acoustic sound signals having different specific frequencies. Thus, by sequentially outputting the acoustic sound signals of the different specific frequencies f1, f2, there are effects of capable of repelling various types of harmful insects while preventing the acquirement of resistance to insecticides of the harmful insects.

Meanwhile, although not shown in the drawing, all the units 102-1, ..., 102-n of the plurality of output units 102 may sequentially output the acoustic sound signals having different specific frequencies. Accordingly, there are effects of capable of repelling various types of harmful insects while preventing the acquirement of resistance to insecticides of the harmful insects. Meanwhile, although not shown in the drawing, the plurality of output units 102 can selectively output the acoustic sound signals. For example, only the portion of the plurality of output units 102 can selectively output the acoustic sound signals.

When the acoustic sound signals are selectively outputted from the portion of the plurality of output units 102, the acoustic sound signals of all the same specific frequencies are outputted, and accordingly the levels of the acoustic sound signals is increased and the effect of the harmful insect repellence is instantaneously increased.

In addition, when the acoustic sound signals are selectively outputted from the portion of the plurality of output units 102, the first output unit 102-1 and the second output unit 102-2 outputting the acoustic sound signals output the
acoustic sound signals having different specific frequencies. Thus, by outputting the acoustic sound signals of the different specific frequencies at the same time zone, there is an effect of capable of repelling various types of harmful insects at the same time.

In addition, when the acoustic sound signals are selectively outputted from the portion of the plurality of output units 102, all the output units outputting the acoustic sound signals may output the acoustic sound signals having different specific frequencies. Thus, by outputting the acoustic sound signals of the different specific frequencies at the same time zone, there is an effect of capable of repelling
various types of harmful insects at the same time.

Meanwhile, the acoustic sound signals having different specific frequencies may be sequentially repeated and outputted from at least portion of the plurality of output units 102.

The invention has been explained above with reference to exemplary embodiments. It will be evident to those skilled in the art that various modifications may be made thereto without departing from the scope as defined by the appended claims.

## Claims

1. An air conditioner comprising:
a display unit (230) displaying a state where the acoustic sound signal is output;
an indoor unit body (2) having an air inlet (4) to suck indoor air and an air outlet (6) to discharge conditioned air; and
a harmful insect repeller (100) attached to the indoor unit body (2) to repel harmful insects;
a wind direction regulation unit (34) disposed in the indoor unit body (2) to regulate a wind direction while guiding the air passing the air outlet, **characterized in that** the harmful insect repeller (100) includes a harmful insect repeller control unit (180) configured to perform a pulse width modulation of a pulse signal for generating a plurality of different specific frequencies that the harmful insects evade,
an amplifying unit (185) to amplify the level of the pulse signals, and
a plurality of output units (102) to convert the level-amplified pulse signal into acoustic sound signals and to output the converted signals,
wherein the output unit (102) of the harmful insect repeller (100) is exposed in a case where the wind direction regulation unit (34) is opened,
wherein the plurality of output units output the acoustic sound signals at the same time, and
wherein a first output unit (102-1) and a second output unit (102-2) of the plurality of output units (102) output sound signals having each different specific frequency.

2. The air conditioner according to the Claim 1, the harmful insect repeller (100) sequentially outputs the plurality of sound wave signals having frequencies of 20 kHz to 100 kHz.

3. The air conditioner according to the Claim 1, the plurality of output units (102) are arranged on both sides of the air outlet in a row.

4. The air conditioner according to the Claim 1, the plurality of output units (102) are arranged on side of the air outlet in a lattice.

5. The air conditioner according to the Claim 1, the harmful insect repeller control unit (180) operates by directly receiving an operation signal from an input unit (220) or by receiving an operation signal through the indoor unit control unit (72).

6. The air conditioner according to the Claim 5, the operation signal is an indoor unit operating operation signal or a harmful insect repelling operation signal.

7. The air conditioner according to the Claim 1, in the display unit (230), the number of light emitting and an amount of light emitting per unit time are increased in proportion to the frequency band of the acoustic sound signal.

## Patentansprüche

1. Klimaanlage aufweisend:
eine Anzeigevorrichtung (230) zur Darstellung eines Zustands, in dem das akustische Schallsignal ausgegeben wird;
einen Innengerätekörper (2) mit einem Lufteinlass (4), um Innenluft anzusaugen und einem Luftauslass (6), um klimatisierte Luft abzugeben; und
einen Schadinsekten-Repeller (100), der am Innengerätekörper (2) befestigt ist, um Schadinsekten zu vertreiben;
eine im Innengerätekörper (2) angebrachte Windrichtungsregeleinheit (34), um eine Windrichtung zu regeln, während die durch den Luftauslass geführte Luft geleitet wird,
**dadurch gekennzeichnet, dass**
der Schadinsekten-Repeller (100) eine Schadinsekten-Repeller-Steuereinheit (180) aufweist, die so ausgestaltet ist, dass sie eine Pulsweitenmodulation eines Pulssignals ausführt, um mehrere unterschiedliche spezifische Frequenzen zu erzeugen, denen sich die Schadinsekten entziehen,
eine Verstärkereinheit (185), um den Pegel der Pulssignale zu verstärken, und
mehrere Ausgabeeinheiten (102), um die pegelverstärkten Pulssignale in akustische Schallsignale umzuwandeln und die umgewandelten Signale auszugeben,
wobei die Ausgabeeinheit (102) des Schadinsekten-Repellers (100) in einem Fall, wenn die Windrichtungsregeleinheit (34) geöffnet ist, freiliegt,
wobei die mehreren Ausgabeeinheiten die akustischen Schallsignale gleichzeitig ausgeben, und
wobei eine erste Ausgabeeinheit (102-1) und eine zweite Ausgabeeinheit (102-2) der mehreren Ausgabeeinheiten (102) Schallsignale ausgeben, die alle eine unterschiedliche spezifische Frequenz haben.

2. Klimaanlage nach Anspruch 1, wobei der Schadinsekten-Repeller (100) die mehreren Schallwellensignale mit Frequenzen von 20 kHz bis 100 kHZ sequentiell ausgibt.

3. Klimaanlage nach Anspruch 1, wobei die mehreren Ausgabeeinheiten (102) auf beiden Seiten des Luftauslasses in einer Reihe angeordnet sind.

4. Klimaanlage nach Anspruch 1, wobei die mehreren Ausgabeeinheiten (102) auf Seiten des Luftauslasses in einem Gitter angeordnet sind.

5. Klimaanlage nach Anspruch 1, wobei die Schadinsekten-Repeller-Steuereinheit (180) betrieben wird, indem sie direkt ein Betriebssignal von einer Eingabeeinheit (220) oder ein Betriebssignal durch die Innengerätsteuereinheit (72) erhält.

6. Klimaanlage nach Anspruch 5, wobei das Betriebssignal ein Betriebssignal zum Betreiben des Innengeräts oder ein Betriebssignal zum Vertreiben von Schadinsekten ist.

7. Klimaanlage nach Anspruch 1, wobei in der Anzeigeeinheit (230) die Lichtaustrittsanzahl und Lichtaustrittsmenge pro Zeiteinheit im Verhältnis zum Frequenzbereich des akustischen Schallsignals zunimmt.

## Revendications

1. Climatiseur comprenant :
une unité d'affichage (230) affichant un état dans lequel le signal sonore acoustique est émis ;
un corps d'unité intérieure (2) présentant une entrée d'air (4) pour aspirer l'air intérieur et une sortie d'air (6) pour évacuer l'air conditionné ; et
un dispositif insectifuge (100) attaché au corps d'unité intérieure (2) pour repousser des insectes nuisibles ;
une unité de régulation de direction du vent (34) disposée dans le corps d'unité intérieure (2) pour réguler une direction du vent tout en guidant l'air passant par la sortie d'air,
**caractérisé en ce que**
le dispositif insectifuge (100) inclut une unité de commande de dispositif insectifuge (180) configurée pour réaliser une modulation de largeur d'impulsion d'un signal d'impulsion pour la génération d'une pluralité de différentes fréquences spécifiques que les insectes nuisibles évitent,
une unité d'amplification (185) pour amplifier le niveau des signaux d'impulsion, et
une pluralité d'unités de sortie (102) pour convertir le signal d'impulsion à niveau amplifié en signaux sonores acoustiques et pour émettre des signaux convertis,
dans lequel l'unité de sortie (102) du dispositif insectifuge (100) est exposée dans un cas où l'unité de régulation de direction du vent (34) est ouverte,
dans lequel la pluralité d'unités de sortie émettent les signaux sonores acoustiques en même temps, et
dans lequel une première unité de sortie (102-1) et une seconde unité de sortie (102-2) de la pluralité d'unités de sortie (102) émettent des signaux sonores présentant chaque fréquence spécifique différente.

2. Climatiseur selon la revendication 1, le dispositif insectifuge (100) émet séquentiellement la pluralité de signaux d'onde sonore présentant des fréquences de 20 kHz à 100 kHz.

3. Climatiseur selon la revendication 1, la pluralité d'unités de sortie (102) sont agencées sur les deux côtés de la sortie d'air dans une rangée.

4. Climatiseur selon la revendication 1, la pluralité d'unités de sortie (102) sont agencées sur le côté de la sortie d'air dans un treillis.

5. Climatiseur selon la revendication 1, l'unité de commande de dispositif insectifuge (180) fonctionne par réception directe d'un signal de fonctionnement depuis une unité d'entrée (220) ou par réception d'un signal de fonctionnement au travers de l'unité de commande d'unité intérieure (72).

6. Climatiseur selon la revendication 5, le signal de fonctionnement est un signal de fonctionnement faisant fonctionner l'unité intérieure ou un signal de fonctionnement repoussant les insectes nuisibles.

7. Climatiseur selon la revendication 1, dans l'unité d'affichage (230), le nombre d'émission de lumière et une quantité d'émission de lumière par unité de temps sont augmentés proportionnellement à la bande de fréquence du signal sonore acoustique.
